# FASCICULE DE BREVET EUROPEEN

(11) **EP 0 844 472 B1**
(45) Date de publication et mention de la délivrance du brevet: **16.04.2003**
(21) Numéro de dépôt: 97402711.2
(22) Date de dépôt: 13.11.1997
(51) Int. Cl.: G01M 11/00, G01N 21/88

(54) **Dispositif pour la détection d'un dommage dans une fibre optique**
Vorrichtung zur Fehlerdetektion in einer optischen Faser
Device for detecting damage in an optical fibre

(30) Priorité: 21.11.1996 FR 9614353
(43) Date de publication de la demande: 27.05.1998
(73) Titulaire: QUANTEL, 91940 Les Ulis (FR)
(72) Inventeur: Wazen, Paul, 92160 Antony (FR)
(74) Mandataire: de Saint-Palais, Arnaud Marie

(56) Documents cités:
- FR-A- 2 410 815
- US-A- 4 385 832
- US-A- 4 904 050
- US-A- 5 359 192
- US-A- 5 479 543
- US-A- 5 513 913
- PATENT ABSTRACTS OF JAPAN vol. 006, no. 051 (P-108), 6 avril 1982 & JP 56 164936 A (NEC CORP), 18 décembre 1981,
- PATENT ABSTRACTS OF JAPAN vol. 014, no. 326 (C-0740), 12 juillet 1990 & JP 02 116361 A (OLYMPUS OPTICAL CO LTD), 1 mai 1990,
- PATENT ABSTRACTS OF JAPAN vol. 010, no. 030 (P-426), 5 février 1986 & JP 60 181629 A (MOCHIDA SEIYAKU KK), 17 septembre 1985,

## Description

La présente invention concerne un dispositif pour détecter un dommage dans une fibre optique.

Elle s'applique notamment, mais non exclusivement aux fibres optiques véhiculant des faisceaux laser impulsionnels ou continus, dont l'énergie varie de quelques mJ à plusieurs dizaines de J, et la puissance de quelques mW à plusieurs kW.
Certaines fibres optiques sont utilisées pour véhiculer l'énergie laser d'une manière souple sur des distances relativement importantes.

Or, une fibre optique est caractérisée par plusieurs paramètres tels que son diamètre, sa longueur, son ouverture numérique, le matériau constituant son coeur, ou encore l'état de ses faces d'entrée et de sortie. Par ailleurs, le faisceau laser que l'on désire véhiculer par cette fibre optique est caractérisé par sa longueur d'onde, sa puissance pour un laser à émission continue, son énergie et sa durée d'impulsion pour un laser impulsionnel, l'adaptation du faisceau laser pour l'injecter dans la fibre, etc.

En fonctionnement normal, moyennant des optimisations de ces différents paramètres, le faisceau traverse la fibre sans l'endommager, du moment que l'on respecte le seuil de dommage de la fibre, c'est-à-dire la densité de puissance ou d'énergie maximale admissible par l'intérieur de la fibre, ainsi que par ses faces d'entrée et de sortie. Toutefois, pour des raisons diverses telles que la fatigue de la fibre, la présence d'imperfections dans le matériau constituant la fibre, ou encore la présence de corps étrangers à l'entrée ou à la sortie de la fibre, le seuil de dommage de la fibre est abaissé. La fibre est alors endommagée par le passage du faisceau laser et des pertes qui peuvent être très importantes apparaissent dans la transmission dégradée du faisceau laser.
Dans les applications utilisant des lasers à forte puissance ou à forte énergie, cette dégradation peut entraîner la rupture de la fibre sous l'effet de l'énergie du faisceau laser transmis.

Dans de nombreuses applications, cette dégradation de la transmission du faisceau laser n'est pas admissible. Par ailleurs, pour des raisons de sécurité, il est impératif de détecter la moindre défaillance de la fibre, pour pouvoir bloquer le faisceau laser dès l'apparition d'un dommage, et en particuliers, avant la rupture de celle-ci.

Pour tenter d'apporter une solution à ce problème, on a déjà proposé d'enrouler un filament conducteur autour de la fibre, ce filament étant coupé par le faisceau laser s'il se produit une rupture de la fibre. Ainsi, une simple détection électrique de la rupture du filament permet de détecter la rupture de la fibre.
On a également proposé d'utiliser à la place du fil conducteur, une fibre optique de faible diamètre transmettant un signal optique, qui se coupe si la fibre principale casse.
Toutefois, ces solutions ne permettent pas de détecter un dommage dès son apparition dans la fibre, ce qui entraîne un risque pour l'utilisateur car lorsque la fibre casse, l'énergie laser est diffusée dans toutes les directions.
En outre, ces solutions ne conviennent pas si le faisceau laser transmis ne présente pas une énergie suffisante pour couper le filament ou la fibre secondaire.

On a également proposé de mesurer l'énergie en entrée et en sortie de la fibre et de comparer ces deux mesures en vue de détecter une anomalie. Cette solution présente l'inconvénient de nécessiter le prélèvement d'une partie du faisceau laser proportionnelle à son énergie ou à sa puissance à l'entrée et à la sortie de la fibre.

De même le brevet US 4 385 832 décrit un dispositif de détection faisant intervenir un revêtement réfléchissant déposé sur la face émettrice de la fibre optique et un montage optoélectronique permettant de détecter l'intensité du faisceau réfléchi par ce revêtement, au niveau de la face réceptrice de la fibre. Ce dispositif permet de détecter une rupture de la fibre grâce à la variation d'intensité du rayon réfléchi due au fait que le pouvoir réflecteur de la section coupée est différent de celui de la face émettrice de la fibre qui porte ce revêtement Cette solution présente l'inconvénients d'avoir à disposer un revêtement réfléchissant sur la face émettrice de la fibre et de ne pas détecter les dommages qui n'engendrent pas de réflexion.

La demande de brevet japonais N° 56164936 décrit quant à elle un dispositif de détection d'une défectuosité d'une fibre optique consistant à émettre dans la fibre des impulsions lumineuses et à détecter les échos réfléchis par la défectuosité de manière à déterminer la position de la défectuosité le long de la fibre. Il s'agit d'un dispositif relativement complexe qui exige une émission d'impulsions lumineuses impliquant une interruption du fonctionnement normal de la fibre.

La présente invention a pour but de supprimer ces inconvénients. A cet effet, elle se base sur la constatation que lorsque la densité d'énergie ou de puissance du laser excède le seuil de dommage d'un endroit de la fibre, il se produit sous l'effet du faisceau laser traversant la fibre un dommage accompagné d'un point lumineux qui émet dans toutes les directions et dans un large spectre, notamment dans le spectre visible, ce point lumineux étant la conséquence de l'excitation des atomes se trouvant à cet endroit.

Elle propose un dispositif pour la détection d'un dommage dans une fibre optique utilisée pour la transmission d'un faisceau laser émis par une source laser, ce dispositif faisant intervenir des moyens d'application sur la face d'entrée de la fibre d'un faisceau laser présentant un spectre de longueurs d'onde déterminé et des moyens de détection aptes à détecter un faisceau lumineux engendré par un dommage affectant la fibre.

Selon l'invention, ce dispositif est caractérisé en ce les moyens de détection sont conçus de manière à détecter à l'une quelconque des extrémités de la fibre l'émission d'un point lumineux se produisant sur la fibre à un endroit où la densité d'énergie ou de puissance du laser excède un seuil de dommage, ces moyens de détection étant en conséquence sensibles sélectivement à des ondes lumineuses situées en dehors du susdit spectre de manière à éviter toute interférence avec le faisceau transmis dans la fibre par les moyens d'application.

Grâce à ces dispositions, il est possible de détecter un dommage dans une fibre optique, dès son apparition et au niveau de la source laser, ce qui permet de bloquer immédiatement le faisceau laser, et ce sans utiliser un moyen de transmission secondaire en parallèle avec la fibre.

Selon une particularité de l'invention, le dispositif comprend des moyens de transmission et de focalisation pour collecter la lumière provenant d'un dommage de la fibre et transmise par celle-ci à une extrémité, et pour l'envoyer vers les moyens de détection.

Avantageusement, comme le point lumineux engendré par le dommage émet de la lumière dans un large spectre, on peut prévoir un filtre passe-bande interposé sur le trajet du faisceau lumineux appliqué en entrée des moyens de détection, qui laisse passer un spectre de fréquences en dehors de celui du faisceau laser à transmettre par la fibre.

On peut également prévoir des moyens de détection qui ne sont sensibles qu'à des ondes lumineuses en dehors du spectre du faisceau laser transmis par la fibre.

De cette manière, on évite toute interférence entre le faisceau laser transmis par la fibre et les ondes lumineuses qui pourraient être émises par un dommage localisé dans la fibre.

Un mode de réalisation du dispositif selon l'invention sera décrit ci-après, à titre d'exemple non limitatif, avec référence aux dessins annexés dans lesquels :
La figure 1 représente schématiquement un dispositif émetteur d'un faisceau laser dans une fibre optique, équipé du dispositif de détection de dommage selon l'invention ;
Les figures 2 à 8 montrent des variantes du dispositif représenté sur la figure 1.

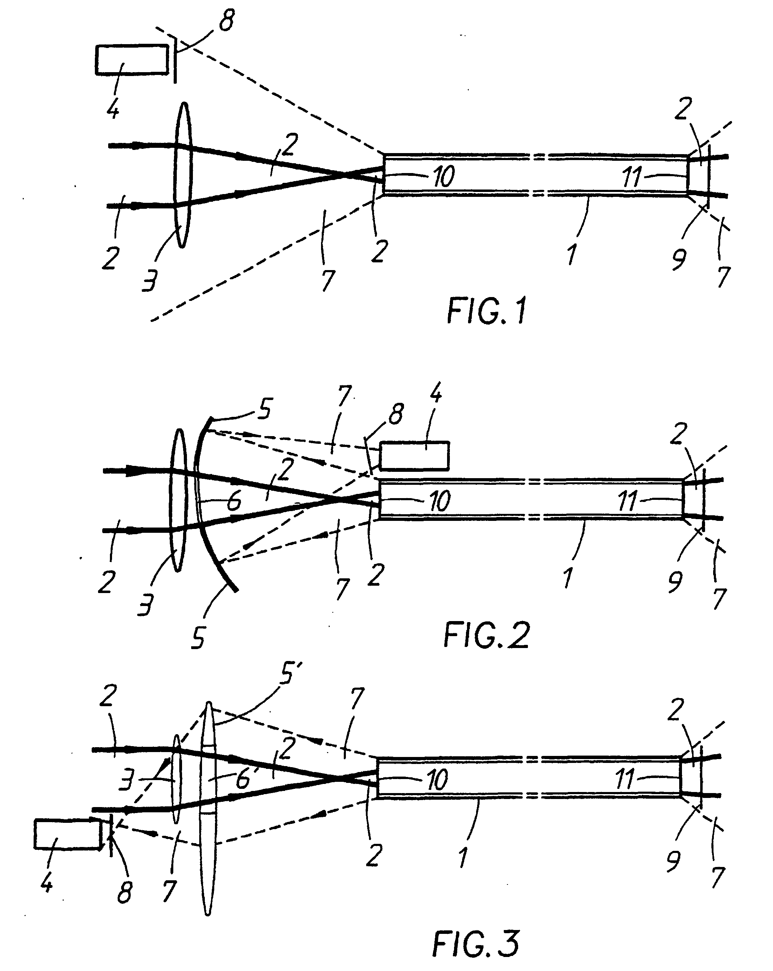

La figure 1 représente une fibre optique 1 qui transmet un faisceau laser focalisé d'une manière connue par une lentille 3 et appliqué sur la face d'entrée 10 de la fibre 1.
Pour détecter une anomalie dans la fibre, on a disposé un détecteur 4 qui capte une partie du faisceau lumineux 7 transmis vers la face d'entrée 10 de la fibre 1 et émis par un éventuel point endommagé de la fibre. De cette manière, une partie des rayons lumineux engendrés dans la fibre du fait de la présence d'un dommage localisé, et qui sont envoyés par la fibre 1 vers la face d'entrée 10, sont appliqués en entrée du détecteur 4.

Le détecteur 4 peut par exemple consister en un dispositif à cellules photoélectriques qui délivrent un signal électrique lorsqu'elles sont soumises à une intensité lumineuse.

Pour améliorer la sensibilité de détection d'une anomalie, on peut disposer à une extrémité de la fibre, par exemple en entrée, un moyen de transmission et de focalisation qui concentre les rayons renvoyés par la fibre pour les focaliser vers l'entrée du détecteur 4.

Tel que représenté sur la figure 2, ces moyens de transmission et de focalisation consistent en un réflecteur convergent 5, avantageusement muni d'un trou 6 pour laisser passer le faisceau laser incident 2.

Alternativement, à la place du perçage 6, on peut avantageusement utiliser un réflecteur 5 ayant subi un traitement dichroïque de manière à ce qu'il transmette le faisceau laser incident 2 et qu'il réfléchisse le faisceau lumineux 7. Ainsi, la totalité du faisceau lumineux 7 est transmis et focalisé vers l'entrée du détecteur 4.

Bien entendu, comme représenté sur la figure 3, les moyens de transmission et de focalisation peuvent être constitués par un dispositif à lentilles 5' assurant la convergence en direction du détecteur 4, du faisceau lumineux engendré par le point endommagé et transmis vers la face d'entrée 10 de la fibre 1, ce dispositif à lentilles étant également muni d'un trou 6' pour laisser passer le faisceau laser 2.

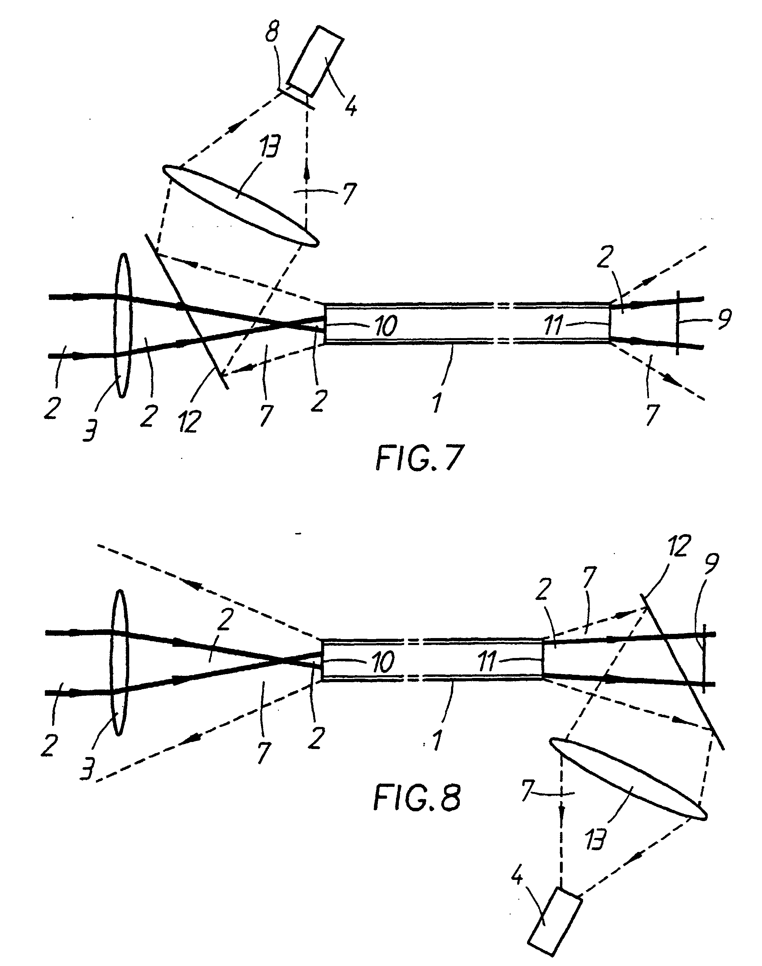

Tel que représenté sur la figure 7, les moyens de transmission et de focalisation peuvent également être constitués par une lame à face parallèles 12 ayant subi un traitement dichroïque de manière à être transparente vis à vis du faisceau laser 2, et à réfléchir le faisceau lumineux 7. Après réflexion sur la lame 12, le faisceau lumineux 7 peut être focalisé vers l'entrée du détecteur 4 par une lentille convergente 13. Cette variante de réalisation de l'invention permet également de transmettre et focaliser la totalité du faisceau lumineux 7 vers l'entrée du détecteur 4.

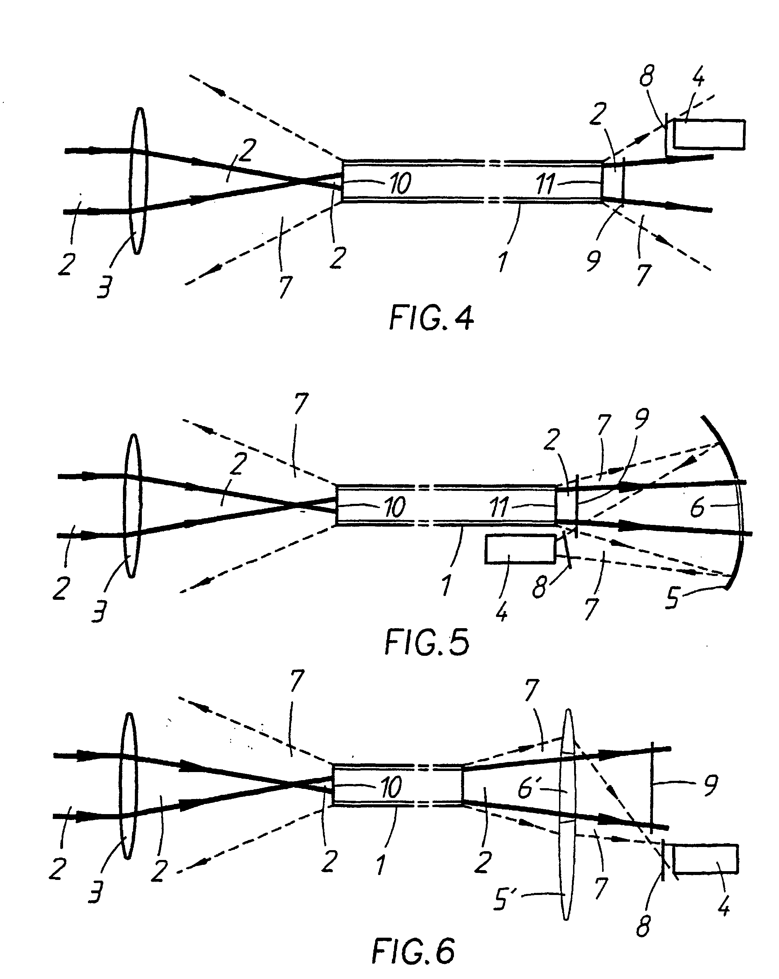

Il est à noter que le concept de l'invention n'est pas modifié si, au lieu de disposer le détecteur 4 et, le cas échéant, les moyens de transmission et de focalisation 5, 5', 12 et 13 du côté de la face d'entrée 10 de la fibre 1, on les dispose, comme représenté sur les figures 4 à 6 et 8, du côté de la face de sortie 11, le faisceau lumineux résultant du dommage localisé dans la fibre étant transmis par celle-ci, aussi bien en direction de sa face d'entrée 10 que de sa face de sortie 11.

On peut encore améliorer l'efficacité de la détection en plaçant en amont de l'entrée du détecteur 4 un composant optique 8, tel qu'un dispositif de filtres, pour choisir la plage de longueurs d'onde que l'on désire observer dans le faisceau lumineux qui apparaît à l'entrée ou à la sortie de la fibre 1, et en particulier pour retirer la plage de longueurs d'ondes du faisceau laser 2.

De même, pour éviter les perturbations lumineuses liées à certaines applications du faisceau laser après la sortie de la fibre 1, on peut également disposer en aval de la face de sortie 11 de la fibre 1 un dispositif de filtres 9 qui laisse passer uniquement le spectre de fréquences du faisceau laser 2 et une autre plage de fréquences si nécessaire.

Grâce au dispositif qui vient d'être décrit, il est possible de stopper le faisceau laser dès qu'un dommage dans la fibre est détecté par le détecteur 4, sans avoir à attendre que ce dommage, qui absorbe une partie de plus en plus grande du faisceau laser transmis, provoque la rupture de la fibre. A cet effet, il suffit de coupler la sortie du détecteur 4 à l'entrée du dispositif de commande d'un obturateur du faisceau laser 2.

## Revendications

1. Dispositif pour la détection d'un dommage dans une fibre optique (1) utilisée pour la transmission d'un faisceau laser (2), ce dispositif faisant intervenir des moyens d'application sur la face d'entrée de la fibre d'un faisceau laser présentant un spectre de longueurs d'onde déterminé et des moyens de détection aptes à détecter un faisceau lumineux engendré par un dommage affectant la fibre, **caractérisé en ce que** les moyens de détection sont conçus de manière à détecter à l'une quelconque des extrémités de la fibre l'émission d'un point lumineux se produisant sur la fibre à un endroit où la densité d'énergie ou de puissance du laser excède un seuil de dommage, ces moyens de détection étant en conséquence sensibles à des ondes lumineuses situées en dehors du susdit spectre de manière à éviter toute interférence avec le faisceau transmis dans la fibre par les moyens d'application.

2. Dispositif selon la revendication 1,
**caractérisé en ce qu'**il comprend des moyens de transmission et de focalisation (5, 5') pour collecter le faisceau lumineux (7) transmis par la fibre optique (1) en direction d'une des extrémités (10, 11) de la fibre (1), et pour le transmettre en direction des moyens de détection (4).

3. Dispositif selon la revendication 2,
**caractérisé en ce que** les moyens de transmission et de focalisation (5, 5') comprennent un réflecteur (5) concave qui concentre et oriente le faisceau lumineux (7) provenant d'une des faces d'extrémité (10, 11) de la fibre optique (1) vers l'entrée des moyens de détection (4).

4. Dispositif selon la revendication 2,
**caractérisé en ce que** les moyens de transmission et de focalisation (5, 5') comprennent un dispositif à lentilles convergentes (5') qui concentre et oriente le faisceau lumineux (7) provenant d'une des faces d'extrémité (10, 11) de la fibre optique (1) vers l'entrée des moyens de détection (4).

5. Dispositif selon la revendication 2,
**caractérisé en ce que** les moyens de transmission et de focalisation (5, 5') comprennent une lame mince (12) à faces parallèles ayant subi un traitement dichroïque pour transmettre le faisceau laser (2) et réfléchir le faisceau lumineux (7) provenant d'une des faces d'extrémité (10, 11) de la fibre optique (1) en direction des moyens de détection (4), au travers d'un dispositif à lentilles convergentes (13) qui focalise le faisceau lumineux (7) vers l'entrée des moyens de détection (4).

6. Dispositif selon l'une des revendications 2 à 4,
**caractérisé en ce que** les moyens de transmission et de focalisation sont munis d'un perçage (6, 6') laissant passer le faisceau laser (2) appliqué sur la face d'entrée (10) ou provenant de la face de sortie (11) de la fibre (1).

7. Dispositif selon la revendication 3,
**caractérisé en ce que** le réflecteur (5) a subi un traitement dichroïque pour réfléchir le faisceau lumineux (7) et transmettre le faisceau laser (2).

8. Dispositif selon l'une des revendications précédentes,
**caractérisé en ce que** les moyens de détection comprennent un filtre passe-bande optique (8) interposé sur le trajet du faisceau lumineux (7) appliqué en entrée d'un détecteur (4), qui laisse passer au moins une partie du spectre de longueurs d'onde du faisceau lumineux (7), à l'exception du spectre de longueurs d'onde du faisceau laser (2) transmis par la fibre (1).

9. Dispositif selon l'une des revendications précédentes,
**caractérisé en ce qu'**il comprend un filtre passe-bande optique (9) disposé sur le passage du faisceau laser (2) après la sortie de la fibre (1), qui laisse passer le spectre de longueurs d'onde du faisceau laser (2) transmis par la fibre (1), et éventuellement une autre plage de longueurs d'onde.

10. Dispositif selon l'une des revendications précédentes,
**caractérisé en ce que** les moyens de détection délivrent un signal de sortie qui est appliqué à l'entrée de moyens de commande de la source du faisceau laser (2), pour interrompre l'arrivée de ce dernier sur la face d'entrée (10), dès qu'ils détectent un dommage dans la fibre (1).

11. Dispositif selon l'une des revendications 2 à 10,
**caractérisé en ce que** le détecteur (4) consiste en un dispositif à cellules photodétectrices qui délivrent un signal électrique de sortie lorsqu'elles sont soumises à une intensité lumineuse.

## Claims

1. Device for detecting a defect in an opticfiber (1) used for transmitting a laser beam (2), said device introducing application means on the inlet face of the opticfiber of a laser beam having a specific wavelength spectrum and detection means able to detect a light beam generated by a defect affecting the opticfiber, said device being **characterised in that** the detection means are designed so as to detect at any one of the extremities of the opticfiber the transmission of a luminous point occurring on the opticfiber at a location where the power or energy density of the laser exceeds a damage threshold, these detection means being accordingly sensitive to the light waves situated outside said spectrum so as to avoid any interference with the beam transmitted in the opticfiber by the application means.

2. Device according to claim 1, **characterised in that** it includes transmission and focussing means (5, 5') for collecting the light beam (7) transmitted by the opticfiber (1) in the direction of one of the extremities (10, 11) of the opticfiber (1) and send it in the direction of the detection means (4).

3. Device according to claim 2, **characterised in that** the transmission and focussing means (5, 5') include a concave reflector (5) which concentrates and orientates the light beam (7) originating from one of the extremity faces (10, 11) of the opticfiber (1) towards the inlet of the detection means (4).

4. Device according to claim 2, **characterised in that** the transmission and focussing means (5, 5') include a device with convergent lenses (5') which concentrates and orientates the light beam (7) originating from one of the extremity faces (10, 11) of the opticfiber (1) towards the inlet of the detection means (4).

5. Device according to claim 2, **characterised in that** the transmission and focussing means (5, 5') include a thin blade (12) with parallel faces and having undergone a dichroic treatment so as to transmit the laser beam (2) and reflect the light beam (7) originating from one of the extremity faces (10, 11) of the opticfiber (1) in the direction of the detection means (4) through a convergent lens device (13) which focusses the light beam (7) towards the inlet of the detection means (4).

6. Device according to one of claims 2 to 4, **characterised in that** the transmission and focussing means are provided with a perforation (6, 6') allowing the laser beam (2) applied to the inlet face (10) or originating from the outlet face (11) of the opticfiber (1) to pass.

7. Device according to claim 3, **characterised in that** the reflector (5) has undergone a dichroic treatment for reflecting the light beam (7) and transmitting the laser beam (2).

8. Device according to one of the preceding claims, **characterised in that** the detection means include an optical bandpass filter (8) inserted on the path of the light beam (7) applied at the inlet of a detector (4) which allows at least one portion of the spectrum of the wavelengths of the light beam (7) to pass, except for the spectrum of wavelengths of the laser beam (2) transmitted by the opticfiber (1).

9. Device according to one of the preceding claims, **characterised in that** it includes an optical bandpass filter (9) placed on the passage of the laser beam (2) behind the outlet of the opticfiber (1) which allows the spectrum of wavelengths of the laser beam (2) transmitted by the opticfiber (1) to pass and possibly another range of wavelengths.

10. Device according to one of the preceding claims, **characterised in that** the detection means deliver an outlet signal which is applied to the inlet of the control means of the source of the laser beam (2) so as to interrupt the arrival of the latter on the inlet face (10) as soon as they detect a defect in the opticfiber (1).

11. Device according to one of claims 2 to 10, **characterised in that** the detector (4) consists of a device with photosensitive cells which deliver an electric output signal when they are subjected to a light intensity.

## Patentansprüche

1. Vorrichtung für die Feststellung eines Schadens in einem Lichtwellenleiter (1), der für die Übertragung eines Laserstrahls (2) verwendet wird, wobei diese Vorrichtung Mittel verwendet, um an die Eingangsseite des Lichtwellenleiters einen Laserstrahl anzulegen, der ein bestimmtes Wellenlängenspektrum aufweist, und Ortungseinrichtungen, die in der Lage sind, einen Lichtstrahl zu orten, der durch einen Schaden am Lichtwellenleiter hervorgerufen wird, **dadurch gekennzeichnet, dass** die Ortungseinrichtungen so konzipiert sind, dass sie an jedem beliebigen Ende des Lichtwellenleiters die Absendung eines Lichtpunkts orten, der am Lichtwellenleiter an einer Stelle erzeugt wird, an dem die Energiedichte oder die Leistung des Lasers eine Schadensschwelle übersteigt, wobei diese Ortungseinrichtungen infolgedessen für Lichtwellen sensibel sind, die außerhalb des genannten Spektrums liegen, um jede Interferenz mit dem Lichtstrahl zu vermeiden, der im Lichtwellenleiter anhand der Mittel für das Anlegen des Laserstrahls erzeugt wird.

2. Vorrichtung gemäß Patentanspruch 1,
**dadurch gekennzeichnet, dass** sie Mittel für die Übertragung und Fokalisierung (5, 5') beinhaltet, um den Lichtstrahl (7), der von Lichtwellenleiter (1) übertragen wird, in Richtung auf eines der Enden (10, 11) des Lichtwellenleiters (1) zu sammeln und um ihn in Richtung der Ortungseinrichtungen (4) zu übermitteln.

3. Vorrichtung gemäß Patentanspruch 2,
**dadurch gekennzeichnet, dass** die Übertragungs- und Fokalisierungsmittel (5, 5') einen konkaven Reflektor (5) beinhalten, der den Lichtstrahl (7), der von einem der Enden (10, 11) des Lichtwellenleiters (1) stammt, zu konzentrieren und in Richtung auf den Eingang der Ortungsmittel (4) zu orientieren.

4. Vorrichtung gemäß Patentanspruch 2,
**dadurch gekennzeichnet, dass** die Übertragungs- und Fokalisierungsmittel (5, 5') eine Vorrichtung mit konvergenten Linsen (5') beinhalten, die den Lichtstrahl (7), der von einem der Enden (10, 11) des Lichtwellenleiters (1) stammt, konzentriert und in Richtung auf den Eingang der Ortungsmittel (4) orientiert.

5. Vorrichtung gemäß Patentanspruch 2,
**dadurch gekennzeichnet, dass** die Übertragungs- und Fokalisierungsmittel (5, 5') eine dünne Lamelle (12) mit parallelen Seiten beinhalten, die eine dichroitische Behandlung erhalten haben, um den Laserstrahl (29) zu übertragen und den Lichtstrahl (7), der von einem der Enden (10, 11) des Lichtwellenleiters (1) stammt, über eine Vorrichtung mit konvergenten Linsen (13), die den Lichtstrahl (7) fokalisiert, in Richtung auf die Ortungseinrichtungen (4) zu reflektieren.

6. Vorrichtung gemäß einem der Patentansprüche 2 bis 4,
**dadurch gekennzeichnet, dass** die Übertragungs- und Fokalisierungsmittel mit einer Bohrung (6, 6') versehen sind, die den Laserstrahl (2), der an die Eingangsseite (10) angelegt worden ist oder von der Ausgangsseite (11) des Lichtwellenleiters (1) stammt, passieren lässt.

7. Vorrichtung gemäß Patentanspruch 3,
**dadurch gekennzeichnet, dass** der Reflektor (5) einer dichroitischen Behandlung unterzogen worden ist, um den Lichtstrahl (7) zu reflektieren und den Laserstrahl (2) zu übertragen.

8. Vorrichtung gemäß einem der vorangegangenen Patentansprüche,
**dadurch gekennzeichnet**, das die Ortungseinrichtungen einen optischen Bandpassfilter (8) beinhalten, der auf dem Weg des Lichtstrahls (7) angeordnet ist, der an den Eingang eines Sensors (4) angelegt wird und mindestens einen Teil des Spektrums der Wellenlängen des Lichtstrahls (7) passieren lässt, mit Ausnahme des Spektrums der Wellenlänge des Laserstrahls (2), der über den Lichtwellenleiter (1) übertragen wird.

9. Vorrichtung gemäß einem der vorangegangenen Patentansprüche,
**dadurch gekennzeichnet, dass** er einen optischen Bandpassfilter (9) beinhaltet, der hinter dem Ausgang des Lichtwellenleiters (1) auf dem Weg des Laserstrahls (2) angeordnet ist und der das Spektrum der Wellenlängen des Laserstrahls (2) passieren lässt, der über den Lichtwellenleiter (1) übertragen wird und eventuell einen weiteren Wellenlängenbereich.

10. Vorrichtung gemäß einem der vorangegangenen Patentansprüche,
**dadurch gekennzeichnet, dass** die Ortungseinrichtungen ein Ausgangssignal abgeben, das an den Eingang der Steuerungsmittel der Quelle des Laserstrahls (2) angelegt wird, um dessen Eintreffen an der Eingangsseite (10) zu unterbrechen, sobald sie einen Schaden im Lichtwellenleiter (1) geortet haben.

11. Vorrichtung gemäß einem der Patentansprüche 2 bis 10,
**dadurch gekennzeichnet, dass** der Sensor (4) aus einer Vorrichtung mit fotosensorischen Zellen besteht, die ein elektrisches Ausgangssignal abgeben, wenn sie dem Licht ausgesetzt sind.
